# FASCICULE DE BREVET EUROPEEN

(11) **EP 1 918 744 B1**
(45) Date de publication et mention de la délivrance du brevet: **26.05.2010**
(21) Numéro de dépôt: 07119452.6
(22) Date de dépôt: 29.10.2007
(51) Int. Cl.: G02B 6/122

(54) **Procédé de réalisation d'un guide a fente**
Verfahren zur Herstellung eines Schlitzwellenleiters
Process for manufacturing a slot waveguide

(30) Priorité: 31.10.2006 FR 0654669
(43) Date de publication de la demande: 07.05.2008
(73) Titulaire: Commissariat à l'énergie atomique et aux énergies alternatives, 75015 Paris (FR)
(72) Inventeur: Jordana, Emmanuel, 38000, GRENOBLE (FR); Fedeli, Jean-Marc, 38120, SAINT-EGREVE (FR); El Melhaoui, Loubna, 38000, GRENOBLE (FR)
(74) Mandataire: Ilgart, Jean-Christophe

(56) Documents cités:
- US-A1- 2005 089 291
- US-A1- 2006 228 074
- BARRIOS C A ET AL: "Electrically driven silicon resonant light emitting device based on slot-waveguide" OPTICS EXPRESS OPT. SOC. AMERICA USA, vol. 13, no. 25, 12 décembre 2005 (2005-12-12), pages 10092-10101, XP002434288 ISSN: 1094-4087
- ALMEIDA V R ET AL: "Guiding and confining light in void nanostructure" OPTICS LETTERS, OSA, OPTICAL SOCIETY OF AMERICA, WASHINGTON, DC, US, vol. 29, no. 11, 1 juin 2004 (2004-06-01), pages 1209-1211, XP002417871 ISSN: 0146-9592

## Description

### DOMAINE TECHNIQUE ET ART ANTÉRIEUR

L'invention se situe dans le domaine de la « Nano Photonique Silicium » (domaine du guidage de lumière dans des guides de dimensions nanométriques) et concerne principalement les interconnections optiques sur puce de silicium et notamment la réalisation de portes logiques photoniques.

Des fonctions optiques à forte intégration peuvent être réalisées sur silicium. Dans une approche générale, on dispose d'émetteurs (intégrés ou rapportés, commandés électriquement) couplés à un ensemble de guides qui réalise une fonction optique soit passivement, soit en fonction d'une commande électrique. Ces guides aboutissent à des photodétecteurs qui délivrent électriquement le résultat de la fonction optique.

Comme décrit dans US 2006/0228074 A1 et US 2005/0089291 A1 le fonctionnement d'un guide à fente met en oeuvre une propagation dans un milieu de faible indice et une discontinuité d'indice qui permet un excellent confinement de la lumière. Cette architecture a, jusqu'à maintenant, permis :
- la conception de commutateurs optiques et de sources de lumière dans les circuits intégrés photoniques, comme décrit dans les articles de C.A. Barrios, Electronics Letters, 40, pp862-863, 2004 et C.A. Barrios et al., Optics Express, 13(25), pp.10092-10101, 2005,
- la réalisation de photo détecteurs compacts, comme décrit dans l'article de T. Baehr-Jones et al., Optics Express, 13(14), pp5216-5226, 2005.

Dans cette structure, le champ optique est augmenté et confiné dans la fente, à la fois géométriquement et optiquement, d'autant plus que la fente est étroite et que le contraste d'indices de réfraction est élevé.

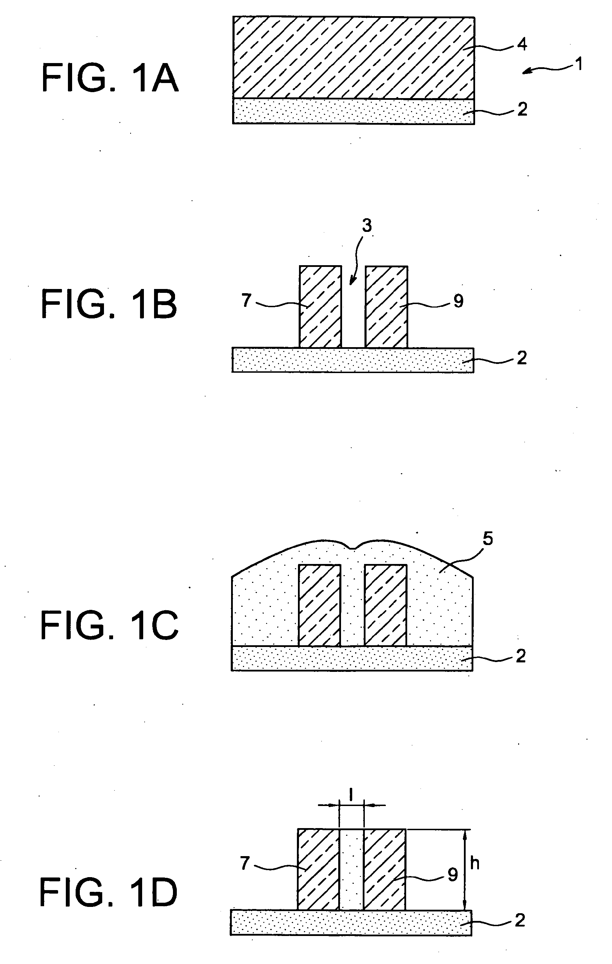

Pour intégrer ce matériau dans le guide à fente, on met généralement en oeuvre un procédé de fabrication tel qu'illustré sur les figures 1A - 1D. Dans un substrat 1 de SOI (figure 1A, sur laquelle les références 2 et 4 désignent respectivement une couche de SiO₂ et une couche de silicium), on grave (figure 1B) une fente 3. Deux parois latérales 7, 9 en silicium sont ainsi formées, da part et d'autre de cette fente. On procède ensuite à un remplissage avec un matériau 5 comme illustré sur la figure 1C. Une étape de planarisation et de gravure conduisent à la structure de la figure 1D.

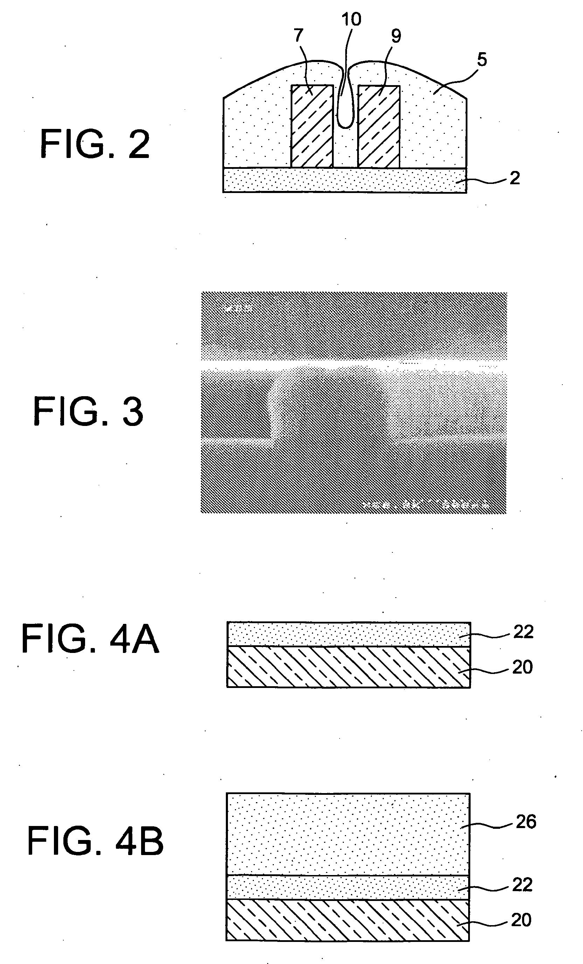

Cependant, aucun essai de remplissage n'a jusqu'à présent été conclu dans la mesure où une faible température de dépôt (par exemple en PECVD) ne permet pas le remplissage de la fente 3. Ce problème existe notamment pour un facteur de forme (équivalent de la hauteur h sur la largeur 1 de la fente, voir figure 1D) supérieur à 1.5. Cela se manifeste par la formation d'une bulle 10 dans la fente 3, dégradant les performances du guide, comme illustré sur la figure 2.

Parfois, il est impossible de remplir la fente. Dans ce cas, on n'a pas seulement une bulle liée à un défaut de remplissage, mais un défaut de remplissage.

Par exemple les différents dépôts PECVD suivants ont été testés: SiO₂ (avec une source SiH₄) à 480°C et 350°C, SiO₂ (TEOS, TetraEthylOrthoSilicate à 400°C et 350°C et SiOₓ (avec une source SiH₄/N₂O) à 400°C.

Comme il est possible de le constater sur la Figure 3, représentant une vue en coupe d'un guide à fente prise au Microscope Electronique à Balayage, la fente n'est pas remplie, et ce quel que soit le type de dépôt ou de matériau. Pour chacun des essais, une bulle d'air apparaît, créée par l'accumulation de dépôt sur la partie supérieure des parois de silicium.

### EXPOSÉ DE L'INVENTION

L'invention comme définie par la revendication 1 propose un procédé alternatif de fabrication qui permet d'éviter l'étape délicate de remplissage de la fente.

L'invention concerne d'abord un procédé de réalisation d'un guide à fente, dans lequel :
- on forme une couche de matériau d'indice de réfraction inférieur à celui du silicium sur une couche d'arrêt de gravure,
- on grave deux tranchées parallèles dans ladite couche de matériau, avec arrêt de la gravure sur ladite couche d'arrêt de gravure, ces deux tranchées étant séparées par une paroi formée en matériau d'indice inférieur à celui du silicium,
- on remplit les tranchées ainsi réalisées par du silicium.
   A titre de matériau d'indice inférieur à celui du silicium, on peut prendre du dioxyde de silicium Si02, du nitrure de silicium SiN ou du SiOₓ non stoechiométrique (x<2).
   Dans le cas du SiOₓ une étape de recuit est réalisée, pour séparer le SiOₓ en deux phases distinctes, formant ainsi des nanocristaux de silicium dans une matrice de SiO₂. Mais l'étape de recuit est de préférence réalisée après formation du SiOₓ et avant la gravure des tranchées.
   Selon l'invention on met en oeuvre un procédé inverse des procédés connus, en déposant tout d'abord le matériau d'indice inférieur à celui du silicium sur une plaque non structurée. Puis celui-ci est gravé sous la forme d'un mur. Ensuite, le silicium peut être déposé.
   Le matériau d'indice inférieur à celui du silicium peut être obtenu par exemple par LPCVD ou PECVD.
   Le silicium utilisé pour remplir les tranchées peut être sous forme amorphe (par un dépôt PECVD).
   La couche d'arrêt de gravure peut être en SiO₂.
   Selon un autre mode de réalisation, le silicium utilisé pour remplir les tranchées peut être sous forme monocristalline ; il est formé par croissance épitaxiale. La couche d'arrêt de gravure peut alors être en Silicium, c'est par exemple la couche superficielle amincie d'un substrat SOI.
   Le matériau d'indice inférieur à celui du silicium peut être éliminé de chaque côté du silicium, formé dans les tranchées de part et d'autre de la paroi en ce matériau.

### BRÈVE DESCRIPTION DES DESSINS

- Les figures 1A-1D représentent des étapes d'un procédé standard de réalisation de guide à fente.
- La figure 2 illustre la présence d'une bulle d'air lors d'un procédé standard de fabrication d'un guide à fente.
- La figure 3 est une vue en coupe au MEB d'un essai de remplissage pour un procédé standard de fabrication d'un guide à fente.
- Les figures 4A-4J sont des étapes d'un procédé selon l'invention, à partir de Si amorphe.
- Les figures 5A-5E sont des étapes d'un procédé selon l'invention, à partir de Si monocristallin.
- Les figures 6A-6J et 7A-7J sont des variantes, respectivement des procédés des figures 4A-4J et 5A-5E.

### EXPOSÉ DÉTAILLÉ DE MODES DE RÉALISATION PARTICULIERS

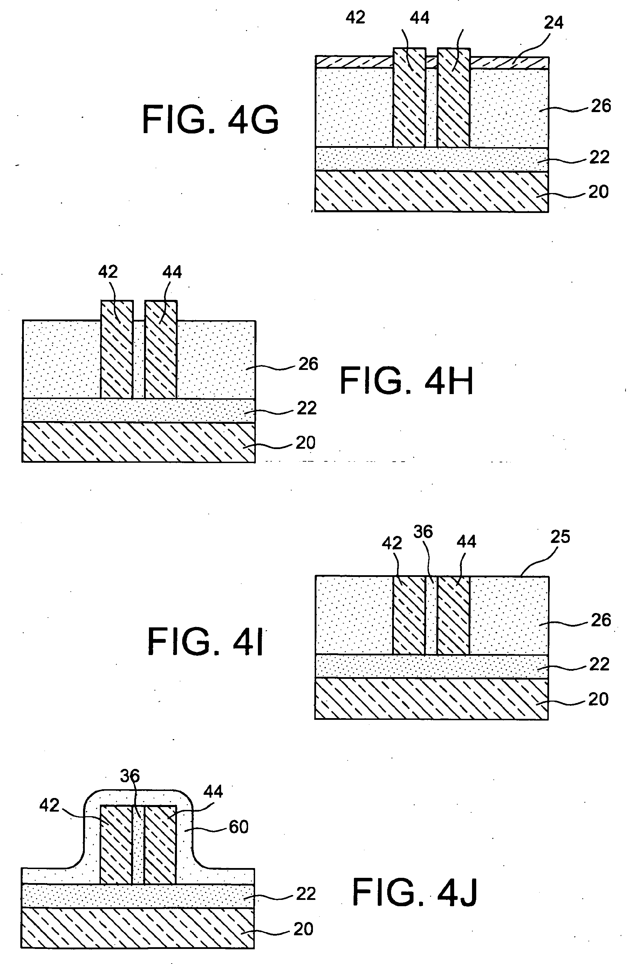

Un premier procédé de fabrication selon l'invention va être décrit en liaison avec les figures 4A-4G.

Ce procédé est notamment adapté au cas où le silicium du guide à fente est sous forme amorphe.

Dans une première étape on réalise (par dépôt ou croissance thermique), sur une plaque 20 de silicium (ce peut être une plaque standard), un oxyde de silicium 22 (figure 4A). Cet oxyde est de préférence assez épais (supérieur à 1µm) pour éviter les pertes induites par couplage avec le substrat.

Un matériau 26, d'indice de réfraction inférieur à celui du silicium, par exemple du dioxyde de silicium Si02, ou du nitrure de silicium SiN ou du SiOₓ non stoechiométrique (x<2) est ensuite formé sur la couche d'oxyde 22 (figure 4B).

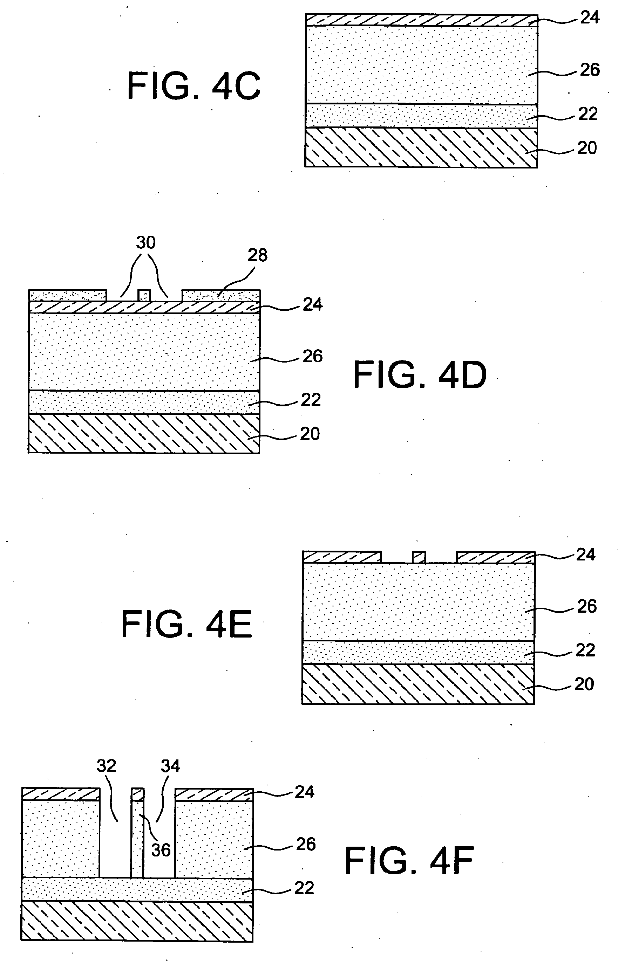

Un masque dur 24 est ensuite formé (figure 4C). On peut utiliser, pour ce masque, du SiN, ou du SiC, ou une résine ou bien un métal, ou du carbone amorphe.

Une résine positive 28 est ensuite déposée sur la couche de masque dur 24. Par lithographie, on forme des ouvertures 30 dans cette résine (figure 4D). Pour les ouvertures étroites, on peut par exemple utiliser une lithographie électronique ou optique DUV à 193nm.

Ces ouvertures permettent de réaliser une gravure de la couche 24 de masque dur (figure 4E). On peut ensuite graver le matériau d'indice inférieur à celui du silicium sur toute son épaisseur, jusqu'à atteindre la couche d'oxyde 22 qui forme couche d'arrêt de gravure (figure 4F). On a ainsi formé deux tranchées 32, 34, séparées par une paroi 36 en matériau d'indice inférieur à celui du silicium

Dans chacune de ces deux tranchées, est ensuite réalisé un dépôt 42, 44 de silicium amorphe (figure 4G).

Une étape de planarisation (figure 4I) permet de ramener le sommet des dépôts de silicium 42, 44 à la hauteur de la surface 25 du matériau d'indice inférieur à celui du silicium, en éliminant également le masque dur.

Enfin (figure 4J) on peut éliminer les portions de matériau d'indice inférieur à celui du silicium de la couche 26 qui sont situées de part et d'autre des dépôts de silicium 42, 44. La paroi 36 est maintenue, par exemple par utilisation d'un masque lors d'une gravure. Là encore, la couche 22 forme la couche d'arrêt pour cette gravure.

Il reste, à l'issue de cette étape, un guide à fente, cette dernière étant constituée par la paroi 36, qui a été isolée lors de la gravure de la couche 26 (figure 4F), paroi qui est flanquée, de part et d'autre, de dépôts de silicium 42, 44.

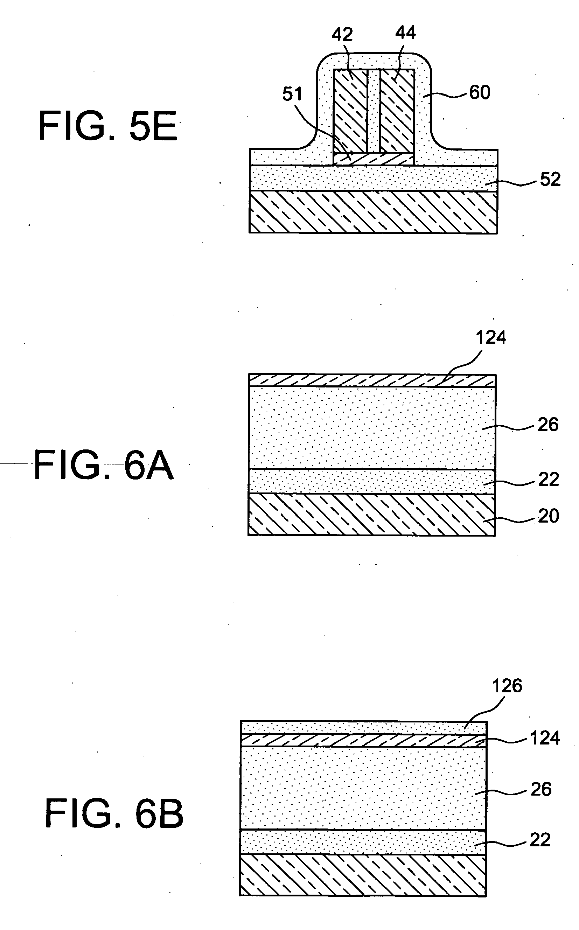

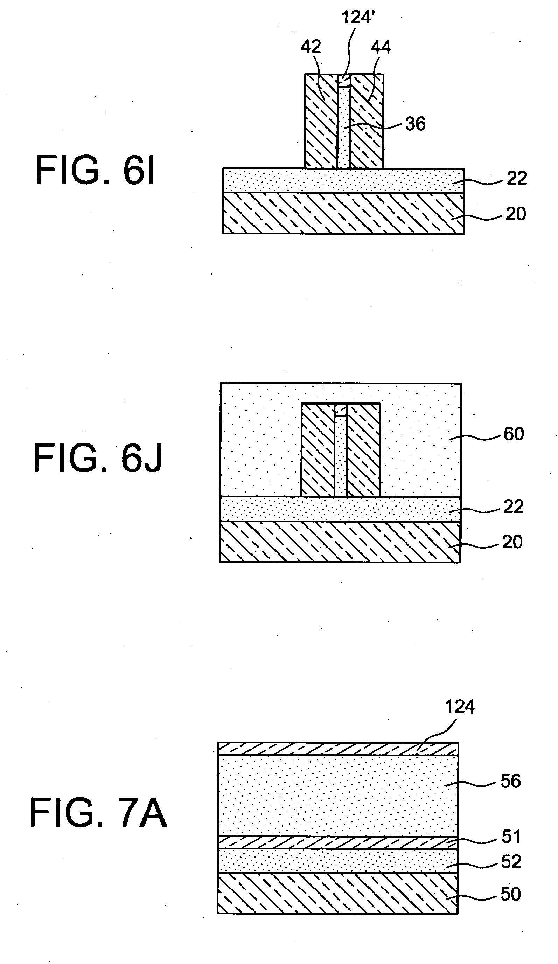

Selon une variante, illustrée en figures 6A-6J, on réalise, sur la structure de la figure 4B, un dépôt 124 de nitrure de silicium SiN (figure 6A), suivi d'un dépôt 126 de masque dur (figure 6B). Le nitrure de silicium 124 pourra servir de couche d'arrêt lors d'une étape de planarisation ultérieure.

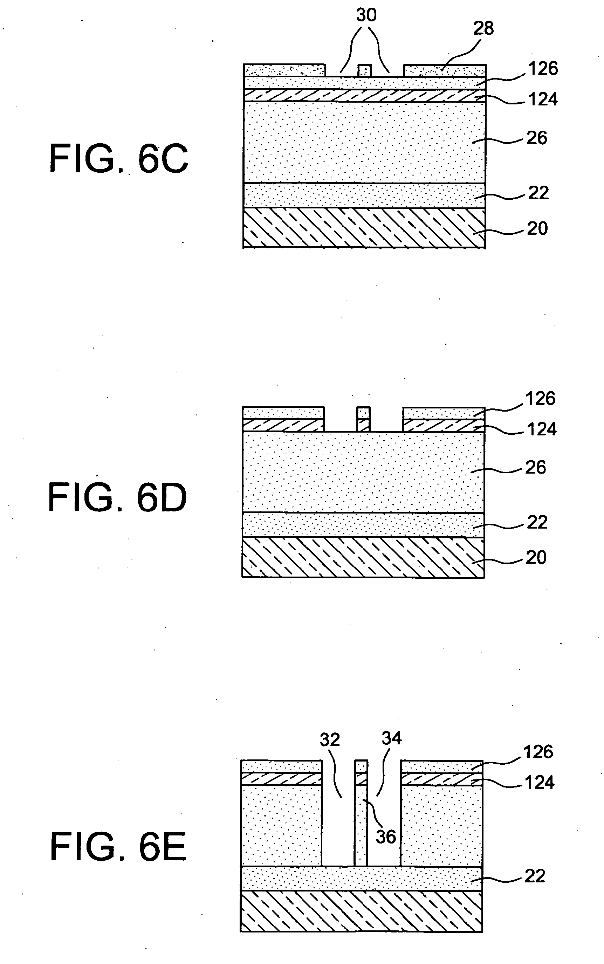

Une résine positive 28 est ensuite déposée. Par lithographie, on forme des ouvertures 30 dans cette résine (figure 6C).

Ces ouvertures permettent de réaliser une gravure de la couche 126 de masque dur et de la couche 124 de nitrure (figure 6D) jusqu'au matériau d'indice inférieur à celui du silicium. On peut ensuite graver ce matériau 26 sur toute son épaisseur (figure 6E), jusqu'à atteindre la couche d'oxyde 22 qui forme couche d'arrêt de gravure. On a ainsi formé deux tranchées 32, 34, séparées par une paroi 36 en un matériau d'indice inférieur à celui du silicium

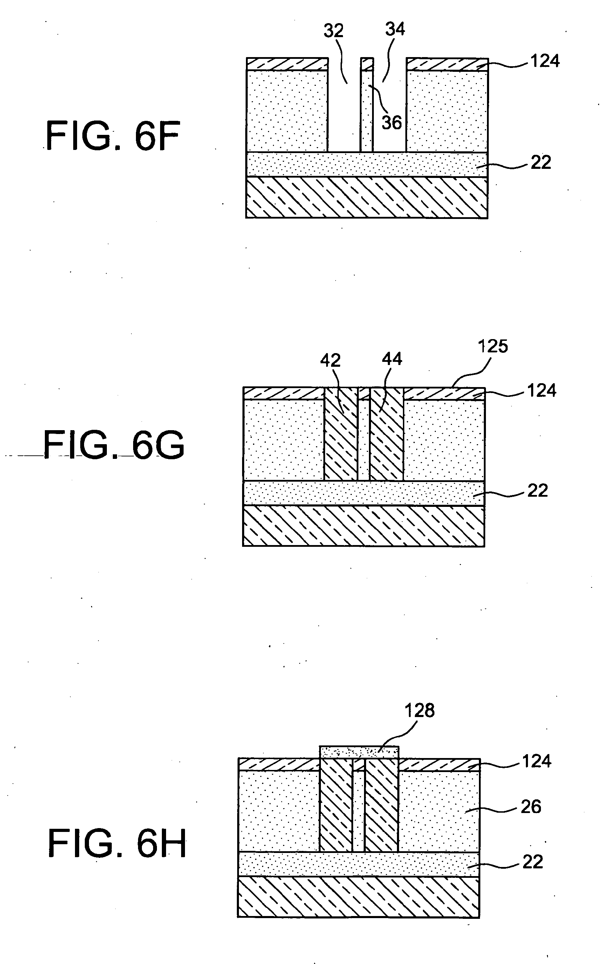

Le masque dur 126 est alors retiré (figure 6F).

Dans chacune de ces deux tranchées, est ensuite réalisé un dépôt 42, 44 de silicium amorphe. Par planarisation on amène la surface supérieure de ces dépôts à la hauteur ou au niveau de la surface extérieure 125 de la couche 124 de nitrure (figure 6G).

Une résine 128 est ensuite déposée. Par lithographie, on définit les bords en vue de la gravure de la couche de nitrure 124 et de la couche sous-jacente 26 (figure 6H).

A l'issue de la gravure de ces dernières couches, puis de l'élimination de la résine 128 (figure 6I), il reste un guide à fente, cette dernière étant constituée par la paroi 36, qui a été isolée lors de la gravure de la couche 26. Cette paroi est flanquée, de part et d'autre, de dépôts de silicium 42, 44. Elle est surmontée d'un reste 124' de nitrure de silicium SiN.

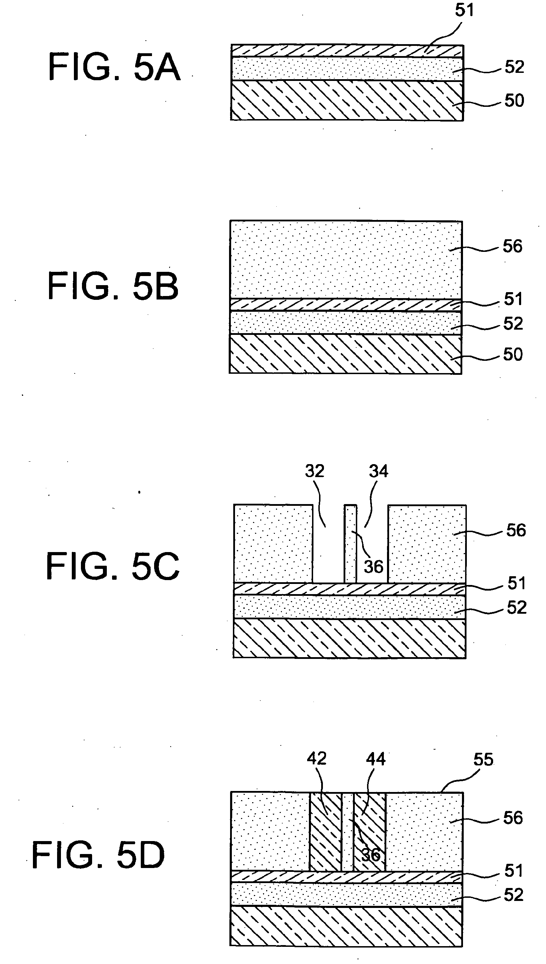

Les figures 5A à 5E décrivent un autre mode de réalisation, particulièrement adapté au cas où le silicium utilisé pour combler les tranchées se présente sous forme monocristalline.

L'élément de départ est constitué d'un empilement d'une couche 52 en dioxyde de silicium et d'une couche 51 en silicium. Un tel empilement est par exemple obtenu à partir d'une plaque SOI, la référence 50 désignant un substrat semi-conducteur, par exemple en silicium. La couche 51 a une structure monocristalline qui permet de servir de cristal de départ en vue d'une étape d'épitaxie. Cette fine couche 51 permet en outre de réduire la dispersion thermique induite par la lumière en se propageant dans le guide.

Un dépôt 56 de matériau d'indice de réfraction inférieur à celui du silicium est ensuite réalisé (figure 5B).

Ce matériau d'indice de réfraction inférieur à celui du silicium est par exemple du dioxyde de silicium Si02, ou du nitrure de silicium SiN ou du SiOₓ non stoechiométrique (x<2).

Après définition par lithographie, cette couche peut être gravée (voir figure 5C). On retrouve donc la structure constituée par la paroi 36 en matériau d'indice inférieur à celui du silicium et par les deux tranchées 32, 34 de chaque côté de la paroi. La couche de silicium 51 sert notamment de couche d'arrêt de gravure.

Du silicium monocristallin 42, 44 peut ensuite être formé par épitaxie à partir de la couche de silicium 51, dans les tranchées 32, 34. Une étape de planarisation permet de ramener le sommet de ces zones épitaxiées au niveau de la surface extérieure 55 de la couche 56 (voir figure 5D).

Le matériau d'indice inférieur à celui du silicium peut ensuite, de part et d'autre des zones épitaxiées de silicium 42, 44, être éliminé, laissant ainsi une structure de guide à fentes comme illustrée sur la figure 5E. Là encore, la paroi 36 reste protégée, par exemple par masquage, lors de cette opération.

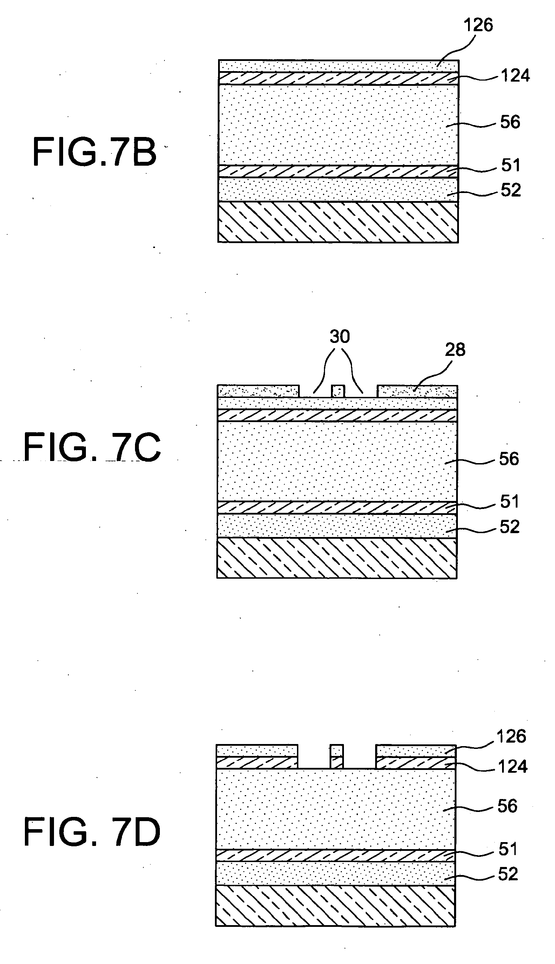

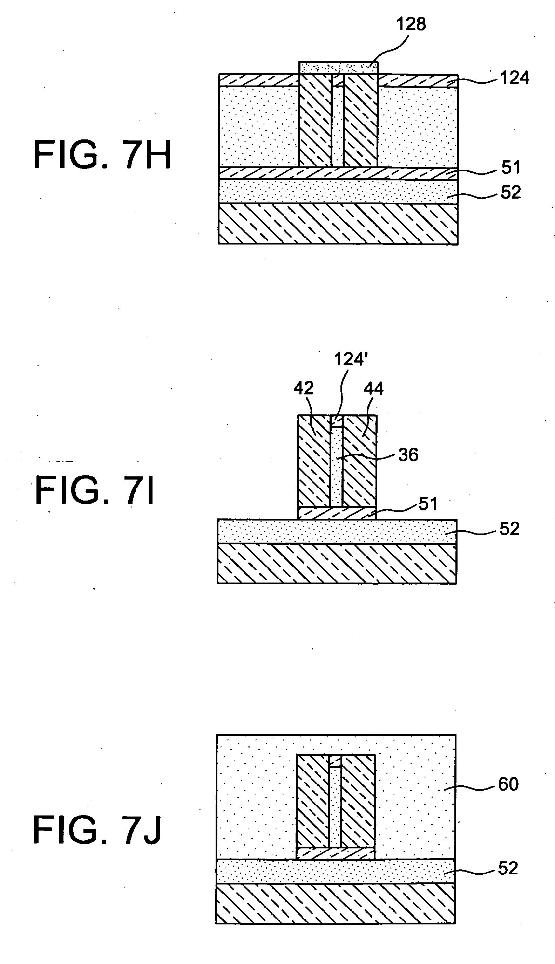

Selon une variante, illustrée en figures 7A-7J, on réalise, sur la structure de la figure 5B, un dépôt 124 de nitrure de silicium SiN (figure 7A), suivi d'un dépôt 126 de carbone amorphe (figure 7B) formant masque dur. Le matériau d'indice inférieur à celui du silicium peut aussi avoir été formé par PECVD ou LPCVD. Le nitrure de silicium 124 pourra servir de couche d'arrêt lors d'une étape de planarisation ultérieure.

Une résine positive 28 est ensuite déposée. Par lithographie, on forme des ouvertures 30 dans cette résine (figure 7C).

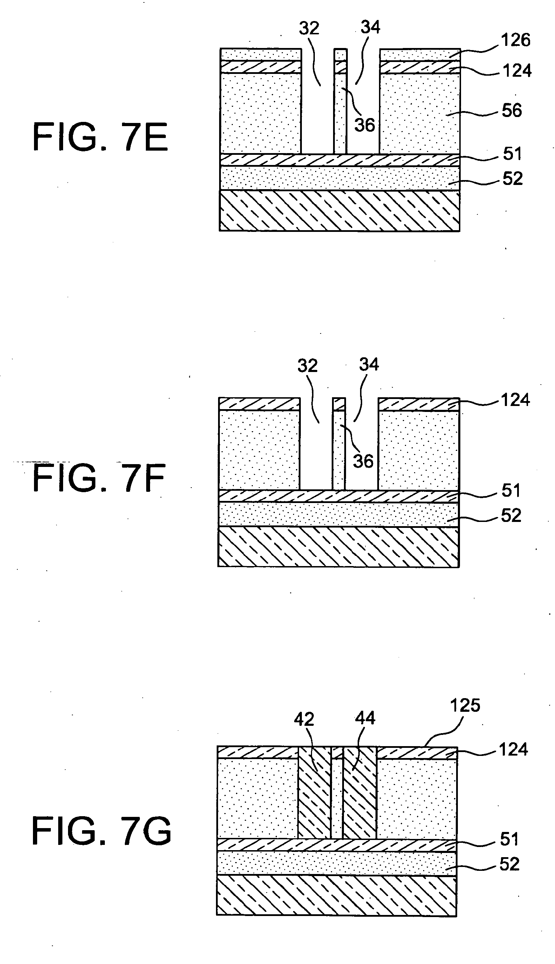

Ces ouvertures permettent de réaliser une gravure de la couche 126 de masque dur et de la couche 124 de nitrure (figure 7D) jusqu'au matériau d'indice inférieur à celui du silicium 56. On peut ensuite graver ce matériau 56 sur toute son épaisseur (figure 7E), jusqu'à atteindre la couche de silicium 51 qui forme couche d'arrêt de gravure. On a ainsi formé deux tranchées 32, 34, séparées par une paroi 36 en matériau d'indice inférieur à celui du silicium Le masque dur 126 est alors retiré (figure 7F).

Dans chacune de ces deux tranchées, est ensuite réalisé du silicium 42, 44 monocristallin par épitaxie. Par planarisation on amène la surface supérieure de ces dépôts à la hauteur ou au niveau de la surface extérieure 125 de la couche de la couche 124 de nitrure (figure 7G).

Une résine 128 est ensuite déposée. Par lithographie, on définit les bords en vue de la gravure de la couche de nitrure 124 et de la couche sous-jacente 56 (figure 7H).

A l'issue de la gravure de ces dernières couches, puis de l'élimination de la résine 128 (figure 7I), il reste un guide à fente, cette dernière étant constituée par la paroi 36, qui a été isolée lors de la gravure de la couche 56 (étape 7F), paroi qui est flanquée, de part et d'autre, de dépôts de silicium 42, 44, et qui est surmontée d'un reste 124' de nitrure de silicium Si3N4.

Quel que soit le mode de réalisation, dans le cas où le matériau d'indice de réfraction inférieur à celui du silicium est du SiOₓ non stoechiométrique (x<2), un recuit, pour la formation de nanocristaux de silicium peut être effectué après la gravure du SiOₓ (c'est-à-dire après les étapes des figures 4F, 5C, 6E ou 7F) mais avant le dépôt de silicium 42, 44 dans les tranchées, ou après ce dépôt de silicium 42, 44 dans les tranchées, mais avant la gravure de SiOₓ, ou après la gravure de SiOₓ (figures 4J, 5E, 61 ou 71).

Mais, si ce SiOx non stoechiométrique est déposé (notamment par PECVD), son épaisseur diminue lors du recuit. Dans ce cas, il est préférable d'insérer l'étape de recuit juste après le dépôt de SiOₓ et avant toute étape de gravure (et notamment l'étape des figures 4F, 5C, 6E et 7F). Sinon il se peut qu'apparaissent des dislocations entre le SiOₓ et le Si. De plus, le recuit a pour effet d'augmenter les pertes optiques de la couche de Silicium.

Quel que soit le mode de réalisation, une fois le guide formé et gravé, une couche 60 d'encapsulation en SiO₂ peut être effectuée (figures 4J, 5E, 6J et 7J).

Par la technique selon l'invention, le guide à fente est réalisé sous la forme de 3 couches 36, 42, 44 (en fait : la paroi 36 et les deux dépôts 42, 44 réalisés de part et d'autre de cette paroi) disposées perpendiculairement au substrat support, soit le substrat 20 de Si et la couche 22 de Si02, dans le cas des figures 4A-4I, ou 6A-6J, soit le SOI dans le cas des figures 5A-5E ou 7A-7J.

L'invention est particulièrement intéressante pour un facteur de forme (comme défini ci-dessus en liaison avec la figure 1D) de la fente supérieur à 1.5.

L'invention s'applique notamment dans le domaine des interconnexions optiques, dans celui des interconnections optiques intra puces, ou encore dans les télécommunications optiques.

## Revendications

1. Procédé de réalisation d'un guide à fente, mettant en oeuvre une propagation dans un milieu d'indice inférieur à celui du silicium, compris entre deux parois en silicium, formant ainsi une discontinuité d'indice qui permet un confinement de la lumière, procédé dans lequel :
a) on forme une couche de matériau d'indice de réfraction inférieur à celui du silicium (26, 56) sur une couche d'arrêt de gravure (22, 51),
b) on grave deux tranchées (32, 34) parallèles dans la couche de matériau d'indice inférieur à celui du silicium (26), avec arrêt de la gravure sur ladite couche d'arrêt de gravure, ces deux tranchées étant séparées par une paroi (36) en matériau d'indice inférieur à celui du silicium,
c) on remplit les tranchées ainsi réalisées par du silicium (42, 44).

2. Procédé selon la revendication 1, le silicium (42, 44) qui remplit les tranchées étant sous forme amorphe.

3. Procédé selon la revendication 2, le silicium qui remplit les tranchées étant formé par dépôt.

4. Procédé selon la revendication 2 ou 3, la couche d'arrêt de gravure (22) étant en SiO₂.

5. Procédé selon la revendication 1, le silicium (42, 44) qui remplit les tranchées étant sous forme monocristalline.

6. Procédé selon la revendication 5, le silicium qui remplit les tranchées étant formé par croissance épitaxiale.

7. Procédé selon la revendication 5 ou 6, la couche d'arrêt de gravure (51) étant en Silicium.

8. Procédé selon la revendication 7, la couche d'arrêt étant la couche superficielle d'un SOI.

9. Procédé selon l'une des revendications 1 à 8, le matériau d'indice de réfraction inférieur à celui du silicium (26, 56) étant ensuite éliminé de chaque côté du silicium, formé dans les tranchées (32,34) de part et d'autre de la paroi (36) en matériau d'indice inférieur à celui du silicium, cette paroi étant maintenue lors de cette élimination.

10. Procédé selon l'une des revendications 1 à 9, l'étape b) de gravure des tranchées étant réalisée à l'aide d'un masque dur (24, 124, 126).

11. Procédé selon la revendication 10, le masque dur étant en SiN, ou en SiC, ou en une résine ou en un métal, ou en carbone amorphe (126).

12. Procédé selon l'une des revendications 1 à 11, le matériau d'indice de réfraction inférieur à celui du silicium étant du dioxyde de silicium SiO2, ou du nitrure de silicium SiN ou du SiOₓ non stoechiométrique (x<2).

13. Procédé selon l'une des revendications 1 à 11, le matériau d'indice de réfraction inférieur à celui du silicium étant du SiOₓ non stoechiométrique (x<2), le procédé comportant en outre une étape :
d) de recuit du SiOₓ (26, 56) non stoechiométrique (x<2), après l'une quelconque des étapes précédentes a), b) ou c).

14. Procédé selon la revendication 13, l'étape d) de recuit étant réalisée après l'étape a) de formation du SiOₓ et avant l'étape b) de gravure des tranchées.

15. Procédé selon l'une des revendications 1 à 14, comportant en outre une étape de planarisation du silicium avec lequel les tranchées ont été remplies.

16. Procédé selon l'une des revendications 1 à 15, comportant en outre une étape de formation d'une couche d'arrêt de planarisation sur la couche de matériau d'indice inférieur à celui du silicium (26, 56).

17. Procédé selon la revendication 16, la couche d'arrêt de planarisation étant en SiN.

## Claims

1. Method for producing a slotted guide, said guide implementing propagation in a medium having an index less than that of silicon, comprised between two walls of silicon, thus forming an index discontinuity which enables containment of light, in which:
a) a layer of material having a refractive index less than that of silicon (26, 56) is formed on an etching barrier layer (22, 51),
b) two parallel trenches (32, 34) are etched into the layer of material having a refractive index less than that of silicon (26), said etching being stopped at said etching barrier layer, these two trenches being separated by a wall (36) of material having a refractive index less than that of silicon,
c) the trenches thus made are filled with silicon (42, 44).

2. Method according to claim 1, the silicon (42, 44) which fills the trenches being in amorphous form.

3. Method according to claim 2, the silicon which fills the trenches being formed via deposition.

4. Method according to claim 2 or 3, the etching barrier layer (22) being SiO₂.

5. Method according to claim 1, the silicon (42, 44) which fills the trenches being in monocrystalline form.

6. Method according to claim 5, the silicon which fills the trenches being formed via epitaxial growth.

7. Method according to claim 5 or 6, the etching barrier layer (51) being made of silicon.

8. Method according to claim 7, the barrier layer being the surface layer of a SOI.

9. Method according to any of claims 1 to 8, the material having a refractive index less than that of silicon (26, 56) then being eliminated from each side of the silicon formed in the trenches (32, 34) on either side of the wall (36) of material having a refractive index less than that of silicon, this wall being maintained during this elimination operation.

10. Method according to any of claims 1 to 9, step b) for etching the trenches being carried out with the aid of a hard mask (24, 124, 126).

11. Method according to claim 10, the hard mask being made of SiN, or of SiC, or of a resin or of a metal, or of amorphous carbon (126).

12. Method according to any of claims 1 to 11, said material having a refractive index less than that of silicon being silicon dioxide SiO2, or silicon nitride SiN, or non-stoichiometric SiOₓ (x<2).

13. Method according to any of claims 1 to 11, said material having a refractive index less than that of silicon being non-stoichiometric SiOₓ (x<2), said method further comprising a step of:
d) annealing said non-stoichiometric Six (26, 56) (x<2) after step a) or b) or c).

14. Method according to claim 13, said step d) of annealing being carried out after the non-stoichiometric SiOₓ forming step a) and prior to step b) for etching the trenches.

15. Method according to any of claims 1 to 14, further comprising a planarization step of the silicon with which the trenches are filled.

16. Method according to any of claims 1 to 15, further comprising a forming step of a planarization stopping layer on said layer of material having a refractive index less than that of silicon (26, 56).

17. Method according to claim 16, said planarization stopping layer being made of SiN.

## Patentansprüche

1. Verfahren zur Herstellung eines Schlitz-Leiters, in dem eine Fortpflanzung bzw. Ausbreitung in einem zwischen zwei Wandungen aus Silizium befindlichen Medium mit einem niedrigeren Brechungsindex als dem von Silizium stattfindet, unter Bildung einer Diskontinuität des Brechungsindex, welche eine Eingrenzung des Lichts gestattet, das Verfahren umfassend:
(a) Ausbilden einer Schicht (26, 56) aus einem Material , dessen Brechungsindex niedriger als der von Silizium ist, auf einer Ätzstoppschicht (22, 51),
(b) Ätzen zweier paralleler Gräben (32, 34) in der Schicht (26) aus einem Material, dessen Brechungsindex niedriger als der von Silizium ist, unter Stoppen der Ätzung auf der genannten Ätzstoppschicht, derart daß die beiden Gräben durch eine Wandung (36) aus dem Material, dessen Brechungsindex niedriger als der von Silizium ist, voneinander getrennt sind,
(c) Ausfüllen der so erhaltenen Gräben mit Silizium (42, 44).

2. Verfahren nach Anspruch 1, wobei das die Gräben ausfüllende Silizium (42, 44) in amorpher Form vorliegt.

3. Verfahren nach Anspruch 2, bei welchem das die Gräben ausfüllende Silizium durch Abscheiden gebildet wird.

4. Verfahren nach Anspruch 2 oder 3, bei welchem die Ätzstoppschicht (22) aus Si 02 besteht.

5. Verfahren nach Ansüpruch 1, bei welchem das die Gräben ausfüllende Silizium (42, 44) in monokristalliner Form vorliegt.

6. Verfahren nach Anspruch 5, bei welchem das die Gräben ausfüllende Silizium durch Epitaxialwachstum gebildet wird,

7. Verfahren nach Anspruch 5 oder 6, bei welchem die Ätzstoppschicht (51) aus Silizium besteht.

8. Verfahren nach Anspruch 7, bei welchem die Ätzstoppschicht (51) die Oberflächenschicht eines SOI ist.

9. Verfahren nach einem der Ansprüche 1 bis 8, bei welchem das Material (26, 56), dessen Brechungsindex niedriger als der von Silizium ist, anschließend zu beiden Seiten des in den Gräben (32, 34) beidseits der Wandung (36) aus Material mit Brechungsindex kleiner als der von Silizium gebildeten Siliziums entfernt wird, wobei diese Wandung bei dieser Entfernung aufrechterhalten wird.

10. Verfahren nach einem der Ansprüche 1 bis 9, bei welchem die Verfahrensstufe b) der Ätzung der Gräben mit Hilfe einer Hartmaske (24, 124, 126) ausgeführt wird.

11. Verfahren nach Anspruch 10, bei welchem die Hartmaske aus SiN , oder aus SiC, oder aus einem Kunstharz oder einem Metall oder aus amorphem Kohlenstoff (126) besteht.

12. Verfahren nach einem der Anasprüche 1 bis 11, bei welchem das Material, dessen Brechungsindex niedriger als der von Silizium ist, aus Siliziumdioxyd SiO 2, oder aus Siliziumnitrid Si N, oder aus nicht-stöcchiome-trischem Si O x ( x < 2) besteht.

13. Verfahren nach einem der Ansprüche 1 bis 11, bei welchem das Material mit Brechungsindex kleiner als der von Silizium aus nichtstöcchiometrischem Si Ox (x < 2) besteht, und wobei das Verfahren des weiteren eine Verfahrensstufe :
(d) Warmvergütungsbehandlung des nicht-stöcchiometrischen Si Ox (x < 2) nach einer der vorhergehenden Verfahrensstufen a), b), oder c) umfaßt.

14. Verfahren nach Anspruch 13, bei welchem die Verfahrensstufe d) der Warmvergütung nach der Verfahrensstufe a) der Bildung des SiOₓ und vor der Verfahrensstufe b) des Ätzens der Gräben erfolgt.

15. Verfahren nach einem der Ansprüche 1 bis 14, bei welchem das Verfahren des weiteren eine Verfahrensstufe der Planarisation des Siliziums, mit welchem die Gräben ausgefüllt wurden, umfaßt.

16. Verfahren nach einem der Ansprüche 1 bis 15, bei welchem das Verfahren des weiteren eine Verfahrensstufe der Bildung einer Schicht zum Stoppen der Planarisierung auf der Schicht (26, 56) aus dem Material mit Brechungsindex niedriger als der des Siliziums umfaßt.

17. Verfahren nach Anspruch 16, bei dem die Planarisierungs-Stoppschicht aus SiN besteht.
